# EUROPÄISCHE PATENTANMELDUNG

(11) **EP 3 482 660 A2**
(43) Veröffentlichungstag der Anmeldung: **15.05.2019**
(21) Anmeldenummer: 18200849.0
(22) Anmeldetag: 17.10.2018
(51) Int. Cl.: A47J 31/44, A47J 31/58

(54) **KAFFEEAUTOMAT MIT GEFÄSSERFASSUNG**

(30) Priorität: 14.11.2017 DE 102017126676
(71) Anmelder: Miele & Cie. KG, 33332 Gütersloh (DE)
(72) Erfinder: Kretschmer, Sascha, 33334 Gütersloh (DE); Pötter, Berthold, 33332 Gütersloh (DE); Linke, Patrick, 33611 Bielefeld (DE)

(57) **Zusammenfassung**

Die Erfindung betrifft einen Kaffeeautomaten mit
einem Strömungsleitungssystem (2) mit einer Wasserzuführung (14), einer Pumpe (8), einer Ventileinrichtung (3) zum Steuern der Strömungswege, einem Boiler oder Durchlauferhitzer (7) und einen Getränkeauslauf (30) mit zumindest einer Auslaufdüse (31, 32);
- einer Brühkammer (41), zum Aufbrühen einer in der Brühkammer eingegebenen vorbestimmten Menge an Trockensubstanz;
- zumindest einem Vorratsbehälter (71) zum Bereithalten einer Sorte Trockensubstanz, wie Kaffeebohnen;
- einer Steuereinrichtung (18, uC) zum Aktivieren und Deaktivieren der Pumpe (8), der Ventileinrichtung (3) und des Durchlauferhitzers (7) derart, um ein Aufbrühen der Trockensubstanz und die Herstellung eines Getränks oder einen Pflegezyklus zum Reinigen und/oder Entkalken des Strömungsleitungssystems (2) zu bewirken;
- ein Erfassungsmittel zum Erfassen eines Gefäßes (44) in der Auslaufposition.

Um die Zuverlässigkeit gegenüber überlaufenden Flüssigkeiten zu verbessern, ist die Steuereinrichtung (18,uC) mit dem Erfassungsmittel wirkverbunden und ferner dazu eingerichtet und programmiert, das Aufbrühen und die Ausgabe des Getränks in Abhängigkeit des erfassten Gefäßes (44) zu aktivieren.

## Beschreibung

Die Erfindung betrifft einen Kaffeeautomaten mit
einem Strömungsleitungssystem mit einer Wasserzuführung, einer Pumpe, einer Ventileinrichtung zum Steuern der Strömungswege, einem Boiler oder Durchlauferhitzer und einen Getränkeauslauf mit zumindest einer Auslaufdüse;
- einer Brühkammer, zum Aufbrühen einer in der Brühkammer eingegebenen vorbestimmten Menge an Trockensubstanz;
- zumindest einem Vorratsbehälter zum Bereithalten einer Sorte Trockensubstanz, wie Kaffeebohnen;
- einer Steuereinrichtung zum Aktivieren und Deaktivieren der Pumpe, der Ventileinrichtung (3) und des Durchlauferhitzers derart, um ein Aufbrühen der Trockensubstanz und die Herstellung eines Getränks oder einen Pflegezyklus zum Reinigen und/oder Entkalken des Strömungsleitungssystems zu bewirken;
- ein Erfassungsmittel zum Erfassen eines Gefäßes in der Auslaufposition.

Heißgetränkeautomaten weisen eine Brühkammer auf, in der eine insbesondere heiße Flüssigkeit, beispielsweise Wasser oder Milch, insbesondere unter Druck durch einen Getränkerohstoff, beispielsweise Kaffeebohnen, Teeblätter oder Kakaopulver, geleitet wird. Dabei nimmt die Flüssigkeit Partikel des Getränkerohstoffes auf und einen Geschmack des Getränkerohstoffes an. Das so hergestellte Heißgetränk, insbesondere Kaffee, Tee oder Kakao, wird über einen Getränkeauslass aus dem Heißgetränkeautomaten abgelassen. Um das Heißgetränk aufzufangen, wird ein Behälter, beispielsweise eine Tasse oder ein Becher, unterhalb des Getränkeauslasses angeordnet, so dass die Flüssigkeit in den Behälter geleitet wird.

Mit solchen Heißgetränkeautomaten sind oftmals verschiedene Getränketypen eines Getränkes herstellbar, indem die Menge und/oder der Mahlgrad des Getränkerohstoffes einstellbar ist, die Menge und/oder die Temperatur des Wassers und/oder der Milch, und/oder indem dem Getränk Getränkezusätze beimischbar sind. Auf diese Weise ist mit demselben Heißgetränkeautomaten beispielsweise nicht nur Kaffee, sondern auch Milchkaffee, Cappuccino oder Latte Macchiato herstellbar. Oder es sind verschiedene Kakaos mit unterschiedlichen Mengen Kakaopulver, mit oder ohne einen Getränkezusatz wie beispielsweise Rum, und mit verschiedener Trinktemperatur herstellbar.

Aus der EP 2 630 904 A1 ist ein Haushaltgerät bekannt, das von einem externen Gerät aus parametriert und aktiviert werden kann in der Art und Weise, dass das im Gerät auszuführende Programm aus dem externen Gerät in die Steuereinrichtung des Haushaltgerätes heruntergeladen wird. Das Starten des Programms erfolgt dabei ebenfalls vom externen Gerät aus.

Aus der DE 10 2014 102 490 A1 ist eine Lösung vorgeschlagen, bei der die Auswahl und Einstellung der Getränkeparameter automatisch in Abhängigkeit des erfassten Gefäßes erfolgt. Dabei trifft der Benutzer die Auswahl seines Getränks in der Art und Weise, dass er die für das ausgewählte Getränk individualisierte Tasse in den Auslaufbereich stellt.

Insgesamt ist es bei den genannten Geräten nicht sichergestellt, dass versehentlich ein Getränk zubereitet wird, obwohl sich kein Gefäß im Auslassbereich befindet. Das birgt neben der Verschwendung auch die Gefahr, dass die Auffangschale unnötig mit Flüssigkeit beaufschlagt wird und überlaufen kann, wenn sie bereits gefüllt ist.

Der Erfindung liegt somit die Aufgabe zu Grunde, einen solchen Getränkeautomaten, insbesondere einen solchen Kaffeevollautomaten hinsichtlich der Zuverlässigkeit und Sicherheit gegen unerwünschtes Austreten von Flüssigkeiten zu verbessern.

Erfindungsgemäß wird unter anderem diese Aufgabe durch einen Kaffeeautomaten mit den Merkmalen des unabhängigen Anspruchs 1 gelöst. Vorteilhafte Ausführungen ergeben sich aus den abhängigen Ansprüchen.

Der Vorteil der Erfindung besteht darin, dass auf einfache Weise die Zuverlässigkeit der Getränkezubereitung verbessert wird. Der Anwender braucht nicht auf irgendwelche Warnmeldung zu reagieren, er erlebt unmittelbar, dass bei einer Fehlbedienung hinsichtlich des Unterstellens einer Tasse in den Ausgabebereich kein Getränk zubereitet wird, der Anwender wird auch nicht mit einem Überlauf aus der Auffangschale konfrontiert, was insgesamt vorteilhaft ist.

Hierzu ist die Steuereinrichtung mit dem Erfassungsmittel wirkverbunden und ferner dazu eingerichtet und programmiert, das Aufbrühen und die Ausgabe des Getränks in Abhängigkeit des erfassten Gefäßes zu aktivieren. Das bedeutet, das Zubereiten und die Ausgabe des Getränks erfolgt erst dann, wenn die Bedingung für die Gefäßerfassung erfüllt ist, also wenn sich ein Gefäß im Auslaufbereich befindet. Damit wird vermieden, dass versehentlich das zubereitete Getränk in die Auffangschale oder auf die Aufstellfläche des Gerätes läuft, wenn sich kein Gefäß im für das Getränk vorgesehenem Auslaufbereich befindet.

Zweckmäßigerweise ist die Steuereinrichtung ferner dazu eingerichtet, die Ausgabe eines Getränks nur dann zu aktivieren, wenn anhand des Erfassungsmittels ein Gefäß an der Auslaufposition erfasst wurde.

In einer bevorzugten Weiterbildung umfasst das Erfassungsmittel einen Näherungssensor oder einen optischen Sensor. Damit ist auf einfache Weise eine berührungslose Erfassung und Erkennung des Behältnisses in der vorgegebenen Auslaufposition bereitgestellt.

In einer weiteren, bevorzugten Ausführung umfasst der Kaffeeautomat einen motorisch angetriebenen, höhenverstellbaren Auslauf mit Gefäßrandsensor, wobei die Steuereinrichtung dazu eingerichtet und programmiert ist, vor Ausgabe der Flüssigkeit den Auslauf in Richtung Gefäßrand zu verfahren, die Verfahrbewegung zu stoppen und die Flüssigkeitsausgabe zu aktivieren, wenn ein Gefäßrand erfasst wurde. Damit werden die ohnehin verwendeten Sensoren für die Höheneinstellung des Auslaufs auch für das Aktivieren der Getränkeausgabe genutzt, sodass keine weiteren Sensoren verwendet werden müssen.

In einer insgesamt zweckmäßigen Ausführung umfasst der Kaffeeautomat eine Auffangschale zum Auffangen von Flüssigkeitsresten und einen Sensor zum Erfassen des Füllstandes der in der Schale befindlichen Flüssigkeit. Die Auffangschale befindet sich dabei unterhalb der Aufstellfläche für das Trinkbehältnis, sodass Flüssigkeitsreste aus nachtropfenden Auslaufdüsen oder überlaufende Flüssigkeiten in die Auffangschale gesammelt werden. Bei Erreichen eines oberen Grenzwertes wird dem Benutzer angezeigt, dass die Auffangschale geleert werden muss, damit der Betrieb fortgesetzt werden kann. In dieser Ausführung ist die Steuereinrichtung ferner dazu eingerichtet, anhand einer Plausibilitätsbewertung aus dem Füllstand in der Auffangschale und/oder dem Vorhandensein eines Gefäßes in der Auslaufposition den Pflegezyklus zu aktivieren. Damit wird sichergestellt, dass die Spülflüssigkeit und benutzte Pflegeflüssigkeit sicher aufgefangen wird und die Auffangschale nicht überläuft.

In einer bevorzugten Weiterbildung dieser Ausführung ist die Plausibilitätsbewertung derart ausgebildet, dass beim Unterschreiten eines vorbestimmten Füllstandes in der Auffangschale den Pflegezyklus zu aktivieren, unabhängig von einem erfassten Gefäß in der Auslaufposition.

Ferner ist die Plausibilitätsbewertung derart ausgebildet, dass nach Erreichen eines vorbestimmten Füllstandes in der Auffangschale den Pflegezyklus nur dann zu aktivieren, wenn ein Gefäß in der Auslaufposition erfasst wurde. Das bedeutet, wenn die Auffangschale so weit gefüllt ist, dass das verbleibende, freie Restvolumen die aufgebrauchte Pflegeflüssigkeit nicht mehr aufnehmen kann, wird der Pflegezyklus nur dann gestartet oder automatisch durchgeführt, wenn sich ein Behältnis im Ausgabebereich befindet und dieses mittels des Erfassungsmittels von der Steuereinrichtung erkannt wurde. Zweckmäßigerweise ist die Plausibilitätsbewertung ferner dazu ausgebildet, dass nach Erreichen eines vorbestimmten Füllstandes in der Auffangschale den Pflegezyklus nicht zu aktivieren, wenn kein Gefäß in der Auslaufposition erfasst wurde.

In einer insgesamt vorteilhaften Ausführung der Erfindung und seiner Ausführungen umfasst der Kaffeeautomat ein Übertragungs- und Empfangsmittel, welches mit der Steuereinrichtung in Wirkverbindung steht, um mittels eines externen Bediengerätes das Aufbrühen und die Ausgabe des Getränks oder einen Pflegezyklus zum Reinigen und/oder Entkalken des Strömungsleitungssystems zu aktivieren. Damit kann der Benutzer aus der Ferne ein Start-Signal zur Aktivierung der Getränkezubereitung senden, ohne dass er Gefahr laufen muss, dass der zubereitete Kaffee in die Auffangschale läuft und diese überläuft, wenn sich kein Gefäß im Ausgabebereich befindet. Die Sicherheit gegen Auslaufen wird insbesondere bei dieser Fernanwendung erheblich verbessert.

Die Erfindung betrifft auch ein System, umfassend einen Kaffeeautomaten wie vorstehend genannt und ein externes Bediengerät, beispielsweise ein Smartphone oder PAD-Computer, welches eine entsprechende Anwendung (App) zur Bedienung des Kaffeeautomaten aufweist. Das externe Gerät ist somit dazu eingerichtet und programmiert ist, unter Zuhilfenahme des Sende- und Empfangsmittels Steuerbefehle und/oder Parameterdaten an die Steuereinrichtung zu übertragen und Zustandsdaten von der Steuereinrichtung zu empfangen.

Ein Ausführungsbeispiel der Erfindung ist in den Zeichnungen rein schematisch dargestellt und wird nachfolgend näher beschrieben. Es zeigen
- Fig. 1:: einen Kaffeeautomaten in einer teilweisen transparenten Darstellung;
- Fig. 2:: eine detaillierte Seitenansicht des Ausgabebereichs und
- Fig. 3:: eine Ausführungsform mit externem Bediengerät.

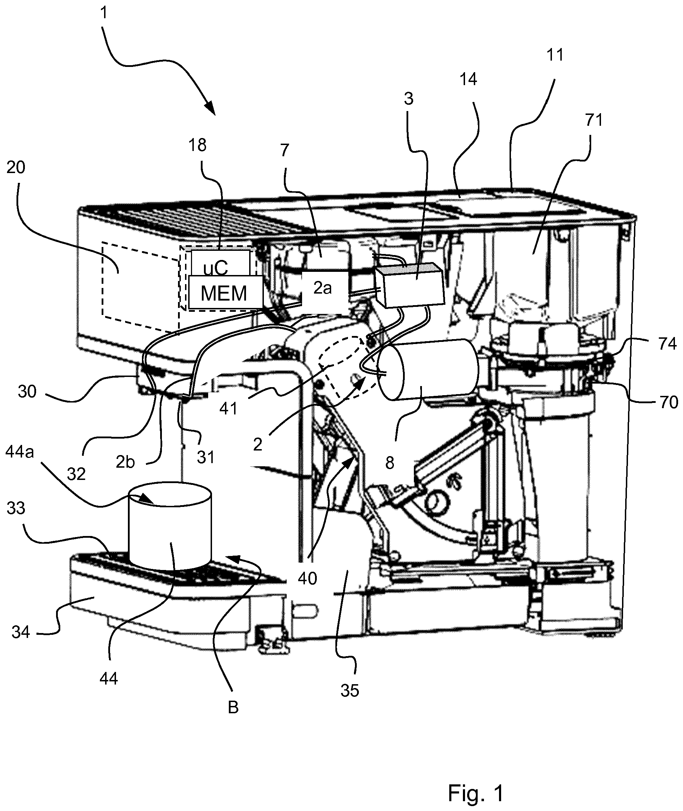

Die Fig. 1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem eine zumindest ein Vorratsbehältern 71, für Kaffeebohnen mit darunter angebrachtem, motorbetriebenen Mahlwerk 70, den Wasserbehälter 14 sowie das Strömungsleitungssystem 2 untergebracht ist. Im Frontbereich des Heißgetränkebereiters 1 verfügt dieser über einen höhenbeweglichen Auslass 30, in dem mehrere Entnahmeeinrichtungen, hier Auslassdüsen 31, 32 untergebracht sind. Bei der Entnahmeeinrichtung 32 handelt es sich im vorliegenden Fall um eine Dampfdüse 32 zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 31 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung 2a, 2b und durch die Ausgabedüse 31 das fertige Kaffeegetränk ausgegeben wird. Bei dieser Ausführung sind die Ausgabedüsen 31, 32 in der Höhe verschiebbar angeordnet, so dass sie der Höhe eines auf dem Abtropfblech 33 abgestellten Trinkgefäßes 44 angepasst werden kann, ohne dass bei der Abgabe des Getränkes ein Verspritzen erfolgt. Das Abtropfblech 33 ist vorzugsweise mit Öffnungen und/oder Schlitzen versehen, um Flüssigkeitsreste in einer unterhalb des Abtropfbleches 33 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Aktoren bzw. Funktionsbaugruppen, wie Pumpen 8, Ventile der Ventilanordnung 3 und Heizeinrichtung 7 und Mahlwerk 70 zu steuern, wie es für die Zubereitung des jeweils ausgewählten Getränkes notwendig ist. Die Steuereinrichtung 18 umfasst einen Mikrocontroller uC mit einem zugeordneten Speicher MEM als Programm- und Parameterspeicher.

Die unterhalb des Bohnenbehälters 71 angeordnete Zuführungseinheit 74 dient zum Öffnen und Schließen des Behälters 71, sodass die darin befindlichen Bohnen in der vorbestimmten Menge unter Wirkung der Schwerkraft in das Mahlwerk 70 gelangen. Insgesamt beziehen sich alle Richtungs- und Positionsangaben auf die betriebsgemäße Aufstellposition des Kaffeeautomaten 1. In einer einfacheren Ausführung des Gerätes 1 kann die Zuführeinheit 74 weggelassen werden, sodass das Mahlwerk 70 stets mit Bohnen befüllt ist. Bei der Verwendung von mehreren Bohnenbehältern ist die Zuführeinheit 74 notwendig, damit die verschiedenen Vorratsbehälter 71 einzeln ausgewählt werden können.

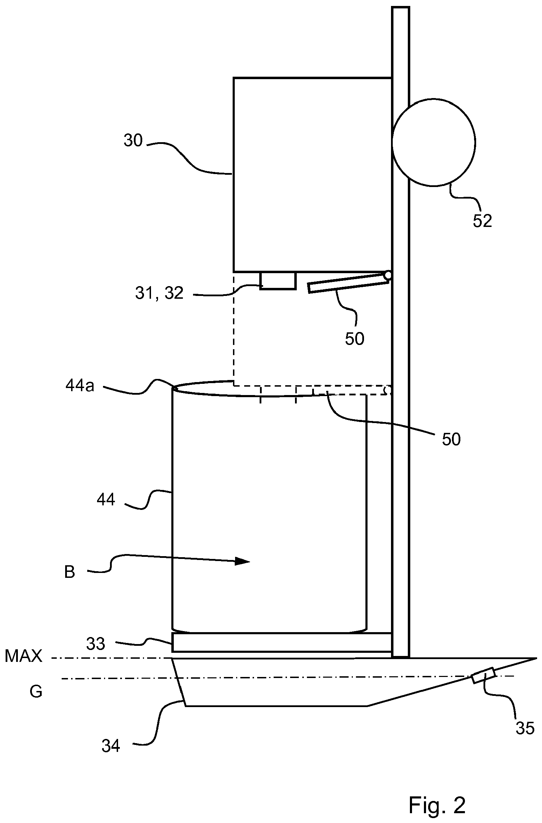

Die in dem Mahlwerk 70 zu einem Pulver verarbeiteten Kaffeebohnen gelangen im Anschluss daran in die Brühkammer 41 der Brüheinheit 40. In Fig. 2 ist ferner schematisch die Steuereinrichtung 18 gezeigt, die einen Mikrocontroller uC umfasst. Ferner ist dem Mikrocontroller uC ein Speicher MEM zugeordnet oder integriert. Der Speicher MEM beinhaltet Programmcode, welcher zum Durchführen der Abläufe zum Zubereiten eines Getränks durch den Mikrocontroller uC ausgebildet ist. Hierzu werden die Aktoren, wie Pumpe 8, Heizung 7, Ventilanordnung 3, und das Mahlwerk 70 mit Hilfe des Mikrocontrollers uC entsprechend aktiviert und deaktiviert. Die Steuereinrichtung 18 ist zu den Aktoren mittels Signalleitungen wirkverbunden.

Fig. 2 zeigt eine erste Seitenansicht des Befüllbereiches B. Dargestellt ist das auf dem Abtropfgitter 33 und unterhalb des Getränkeauslaufes 30 abgestellte Gefäß 44. Der Getränkeauslauf 30 ist in der oberen Position gezeigt. In gestrichelten Linien ist er zur Verdeutlichung in der unteren Position dargestellt. Der Auslauf 30 kann in der skizzierten Ausführung mit einem motorischen Antrieb 52 in seiner Höhe verstellt werden, wobei die Steuereinrichtung 18 den Antrieb 52 steuert.

Sichtbar ist der hier als Schaltwippe ausgebildete Gefäßrandsensor 50. Im Folgenden werden die Begriffe Schaltwippe und Gefäßrandsensor 50 synonym verwendet. Der Gefäßrandsensor 50 ist in der oberen Position nicht betätigt. In der Situation, wie sie gestrichelt skizziert ist, liegt die Wippe 50 auf dem Gefäßrand 44a auf, sodass dadurch das Vorhandensein eine Gefäßes 44 im Auslaufbereich B erkannt wird. Dieser Zustand wird entsprechend von der Steuereinrichtung 18 zur Plausibilitätsbewertung und den daraus folgenden weiteren Ablauf für eine Getränkezubereitung oder eines Pflegeablaufs verwendet.

Unterhalb der Gefäßauflage 33 befindet sich in betriebsgemäßen Zustand die Auffangschale 34, die mit einem Füllstandsensor 35 versehen ist. Der Grenzwert des Füllstandes wird dabei erfasst und beschreibt den Zustand, dass noch eine Restmenge an Flüssigkeit, wie sie für einen Wartungszyklus verbraucht wird, aufnehmen kann. Der Pegel MAX ist der Maximalpegel, ab dem die Schale 34 keine Flüssigkeit mehr aufnehmen kann und im Fall einer weiteren Befüllung überlaufen würde.

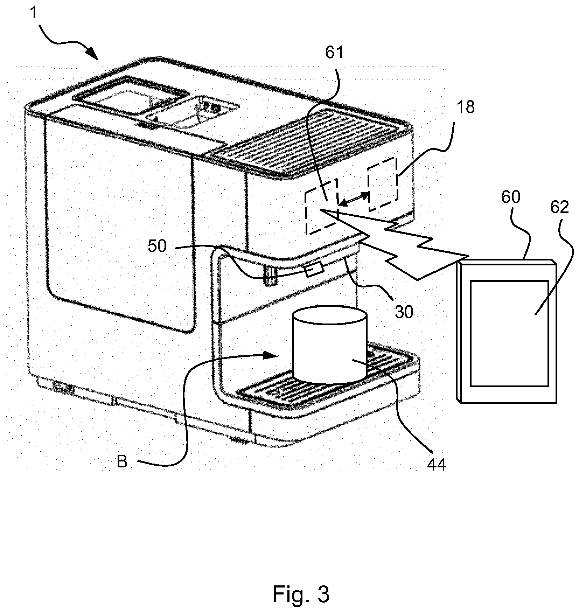

Fig. 3 zeigt schematisch einen Getränkebereiter 1, der mit einer Sende- und Empfangseinrichtung 61 ausgestattet ist, die wiederrum mit der Steuereinrichtung 18 in Verbindung steht. Diese Sende- und Empfangseinrichtung 61 dient dazu, Steuerbefehle vom externen Eingabegerät 60 zu empfangen und diese an die Steuereinrichtung 18 weiterzugeben. Dadurch ist eine Fernbedienung oder Fernsteuerung des Kaffeeautomaten 1 möglich. Das externe Eingabegerät 60 ist in diesem Beispiel ein Smart Phone, welches ein Touchscreen 62 zur Eingabe von Bedienhandlungen umfasst. Dabei ist das Smart Phone 60 mit einer App ausgestattet, die die Bedienung für den Kaffeeautomaten 1 bereitstellt.

Die folgende Tabelle zeigt beispielhaft an, welche Reaktionen der Start eines Pflegzyklus, wie automatische Entkalkung oder automatische Reinigung in Abhängigkeit des Füllgrades in der Auffangschale 34 sich einstellen.

| Füllgrad Abtropfschale 0 - 100 % * | Gefäßerkennung | Ausgabe Getränke |
|---|---|---|
| 0 | egal | ja |
| 50% | egal | ja |
| 80 % (G) | ja | ja |
| 80 % (G) | nein | nein |
| 100 % (MAX) | ja | Nein** |
| 100 % (MAX) | nein | nein |

Die mit** vermerkte Angabe ist ferner mit einer Informationsausgabe zur Angabe eines Fehlers kombiniert; eine Ausgabe des Getränks wird von der Steuereinrichtung 18 verhindert.

## Patentansprüche

1. Kaffeeautomat mit
einem Strömungsleitungssystem (2) mit einer Wasserzuführung (14), einer Pumpe (8), einer Ventileinrichtung (3) zum Steuern der Strömungswege, einem Boiler oder Durchlauferhitzer (7) und einen Getränkeauslauf (30) mit zumindest einer Auslaufdüse (31, 32);
- einer Brühkammer (41), zum Aufbrühen einer in der Brühkammer eingegebenen vorbestimmten Menge an Trockensubstanz;
- zumindest einem Vorratsbehälter (71) zum Bereithalten einer Sorte Trockensubstanz, wie Kaffeebohnen;
- einer Steuereinrichtung (18, uC) zum Aktivieren und Deaktivieren der Pumpe (8), der Ventileinrichtung (3) und des Durchlauferhitzers (7) derart, um ein Aufbrühen der Trockensubstanz und die Herstellung eines Getränks oder einen Pflegezyklus zum Reinigen und/oder Entkalken des Strömungsleitungssystems (2) zu bewirken;
- ein Erfassungsmittel (50) zum Erfassen eines Gefäßes (44) in der Auslaufposition (B);
**dadurch gekennzeichnet,**
**dass** die Steuereinrichtung (18,uC) mit dem Erfassungsmittel (50) wirkverbunden und ferner dazu eingerichtet und programmiert ist, das Aufbrühen und die Ausgabe des Getränks in Abhängigkeit des erfassten Gefäßes (44) zu aktivieren.

2. Kaffeeautomat nach Anspruch 1,
**dadurch gekennzeichnet,**
**dass** die Steuereinrichtung (18, uC) ferner dazu eingerichtet ist, die Ausgabe eines Getränks nur dann zu aktivieren, wenn anhand des Erfassungsmittels (50) ein Gefäß (44) an der Auslaufposition (B) erfasst wurde.

3. Kaffeeautomat nach Anspruch 1 oder 2,
**dadurch gekennzeichnet,**
**dass** das Erfassungsmittel (50) einen Näherungssensor oder einen optischen Sensor umfasst.

4. Kaffeeautomat nach einem der Ansprüche 1 bis 2,
ferner umfassend einen höhenverstellbaren Auslauf (30) mit Gefäßrandsensor (50),
**dadurch gekennzeichnet,**
**dass** die Steuereinrichtung (18, uC) dazu eingerichtet und programmiert ist, vor Ausgabe der Flüssigkeit den Auslauf in Richtung Gefäßrand (44a) zu verfahren, die Verfahrbewegung zu stoppen und die Flüssigkeitsausgabe zu aktivieren, wenn ein Gefäßrand (44a) erfasst wurde.

5. Kaffeeautomat nach einem der Ansprüche 1 bis 4,
ferner umfassend eine Auffangschale (34) zum Auffangen von Flüssigkeitsresten und ein Sensor (35) zum Erfassen des Füllstandes (G) der in der Schale befindlichen Flüssigkeit,
**dadurch gekennzeichnet,**
**dass** die Steuereinrichtung (18, uC) ferner dazu eingerichtet ist, anhand einer Plausibilitätsbewertung aus dem erfassten Füllstand (G) in der Auffangschale (34) und/oder dem Vorhandensein eines Gefäßes (44) in der Auslaufposition (B) den Pflegezyklus zu aktivieren.

6. Kaffeeautomat nach Anspruch 5,
**dadurch gekennzeichnet,**
**dass** die Plausibilitätsbewertung derart ausgebildet ist, dass beim Unterschreiten eines vorbestimmten Füllstandes (G) in der Auffangschale (34) den Pflegezyklus zu aktivieren, unabhängig von einem erfassten Gefäß (44) in der Auslaufposition (B).

7. Kaffeeautomat nach Anspruch 5 oder 6,
**dadurch gekennzeichnet,**
**dass** die Plausibilitätsbewertung derart ausgebildet ist, dass nach Erreichen eines vorbestimmten Füllstandes (G) in der Auffangschale (34) den Pflegezyklus nur dann zu aktivieren, wenn ein Gefäß (44) in der Auslaufposition (B) erfasst wurde.

8. Kaffeeautomat nach einem der Ansprüche 5 bis 7,
**dadurch gekennzeichnet,**
**dass** die Plausibilitätsbewertung ferner dazu ausgebildet ist, dass nach Erreichen eines vorbestimmten Füllstandes (G) in der Auffangschale (34) den Pflegezyklus nicht zu aktivieren, wenn kein Gefäß (44) in der Auslaufposition (B) erfasst wurde.

9. Kaffeeautomat nach einem der Ansprüche 1 bis 8,
ferner umfassend ein Sende- und Empfangsmittel (61), welches mit der Steuereinrichtung (18, uC) in Wirkverbindung steht, um mittels eines externen Bediengerätes (60) das Aufbrühen und die Ausgabe des Getränks oder einen Pflegezyklus zum Reinigen und/oder Entkalken des Strömungsleitungssystems (2) zu aktivieren.

10. System, umfassend einen Kaffeeautomaten (1) gemäß Anspruch 9 und ein externes Bediengerät (60), beispielsweise ein Smartphone oder PAD-Computer, welches dazu eingerichtet und programmiert ist, unter Zuhilfenahme des Sende- und Empfangsmittels (61) Steuerbefehle und/oder Parameterdaten an die Steuereinrichtung (18) zu übertragen und Zustandsdaten von der Steuereinrichtung (18) zu empfangen.
